# EUROPÄISCHE PATENTSCHRIFT

(11) **EP 0 438 374 B1**
(45) Veröffentlichungstag und Bekanntmachung des Hinweises auf die Patenterteilung: **09.03.1994**
(21) Anmeldenummer: 91810007.4
(22) Anmeldetag: 08.01.1991
(51) Int. Cl.: G03B 27/73, G03B 27/72

(54) **Verfahren zur Erstellung von fotografischen Farbkopien von Kopiervorlagen**
Method for producing photographic colour copies from originals
Méthode pour la production de copies photographiques en couleur à partir d'originaux

(30) Priorität: 15.01.1990 CH 111/90; 30.01.1990 CH 284/90
(43) Veröffentlichungstag der Anmeldung: 24.07.1991
(73) Patentinhaber: GRETAG IMAGING AG, CH-8105 Regensdorf (CH)
(72) Erfinder: Ritter von Stein, Werner, W-2000 Hamburg 71 (DE); Kraft, Walter, Dr., CH-8049 Zürich (CH)
(74) Vertreter: Kleewein, Walter, Dr.

(56) Entgegenhaltungen:
- EP-A- 0 242 852
- CH-A- 483 034
- DE-A- 1 300 003
- PATENT ABSTRACTS OF JAPAN vol. 10, no. 34 (P-427)(2091) 08 Februar 1986, & JP A 60182433

## Beschreibung

Die Erfindung betrifft ein Verfahren zur Erstellung von fotografischen Farbkopien von Kopiervorlagen gemäss Oberbegriff des Patentanspruchs 1.

Die in der Fotografie, insbesondere der Farbfotografie, üblicherweise verwendeten Filmmaterialien, insbesondere Negativ-Filme, zeichnen sich durch eine geringe Steilheit der linearen Abschnitte der Farbdichtekurvenverläufe und einen dementsprechend hohen Belichtungsspielraum aus. Bei richtiger Belichtung können daher sowohl die Schatten als auch die Lichter einer kontrastreichen Szene bei nur geringem Verlust an Detailkontrast auf dem Filmmaterial wiedergegeben werden. Die üblichen verfügbaren Kopiermaterialien, insbesondere Farbpapiere, weisen dagegen eine wesentlich grössere Steilheit der linearen Bereiche der Farbdichtekurvenverläufe und einen entsprechend weit geringeren Belichtungsspielraum auf als Negativmaterialien. Die Schattenpartien der Kopiervorlage kommen meist schon in die Schulter, die Lichter in den Kurvenfuss der Farbdichtekurvenverläufe der Kopiermaterialien zu liegen, so dass ein drastischer Verlust an Detailkontrast auftritt. Bei sehr kontrastreichen Negativaufnahmen kommt es daher vielfach zu farblich verfälschten und bezüglich des Detailkontrasts unbefriedigenden Kopien.

Besonders kontrastreiche Szenen treten vor allem bei Schneeaufnahmen, bei Blitzlichtaufnahmen und bei Gegenlichtaufnahmen auf. Bei Kopien von Blitzlichtaufnahmen, insbesondere von Blitzlicht-Portraits, fallen vielfach die Gesichtszüge zu "hart" aus. Darüber hinaus wird im allgemeinen auch der Farbton der Hautfarbe zu "kalt" reproduziert, was auf die von der spektralen Zusammensetzung (oder Farbtemperatur) des Tageslichtes abweichende spektrale Zusammensetzung des Blitzlichtes zurückzuführen ist. Die Details in den Schattenpartien gehen auf den Kopien meist verloren. Gegenlichtaufnahmen wiederum weisen üblicherweise mehr oder weniger ausgedehnte Himmelpartien auf, welche auf dem Negativ im Vergleich zu den bildwichtigen Bereichen stark überbelichtet erscheinen. Kopien derartiger Vorlagen besitzen oft in den Himmelpartien keinerlei Zeichnung mehr. Wolkenstrukturen sind kaum mehr sichtbar, und die Farbe verblasst zu einem unscheinbaren Weiss. Der Versuch, wenigstens den bildwichtigen Teil der Kopiervorlage farblich und dichtemässig abgestuft richtig zu reproduzieren, geht auf Kosten einer akzeptablen Wiedergabe der hellsten Partien und der Schattenbereiche. Ueberdies ist es oft schon schwer bei manueller Verarbeitung zu entscheiden, was nun der bildwichtige Teil der Kopiervorlage ist, bei automatischen Farbkopiergeräten ist eine derartige Beurteilung der Kopiervorlagen praktisch unmöglich.

Auf dem Gebiet der Schwarz-Weiss Fotografie stehen dem Anwender Fotopapiere zur Verfügung, welche einen unterschiedlichen Belichtungsspielraum aufweisen. Je nach Kontrastumfang der Kopiervorlage oder gewünschtem Detailkontrast werden Fotopapiere mit unterschiedlich steilem linearen Bereich des Schwärzungskurvenverlaufes (Gradation) eingesetzt. Die Auswahl von Papieren unterschiedlicher Gradation kann bei Kleinserien und im Amateurbereich erfolgen, für automatische Farbkopiergeräte mit ständig wechselnden Kopiervorlagen unterschiedlichsten Kontrastumfanges ist ein ständiger Wechsel der Papiersorten kaum praktikabel.

In der DE-C-825,205 ist das Problem beschrieben, weiche, harmonische Schwarz-Weiss-Bilder von harten oder zumindest sehr kontrastreichen fotografischen Negativen herzustellen. Darin wird vorgeschlagen, die Steilheit der Schwärzungskurve, die Gradation, des Schwarz-Weiss-Papiers durch eine dosierte diffuse Beleuchtung des Papiers zu beeinflussen. Diese Beleuchtung erfolgt zusätzlich zur eigentlichen Belichtung durch das Negativ. Ausgehend von einem Papier härterer Gradation kann dadurch die Gradation verringert werden, so dass insgesamt weichere Schwarz-Weiss Kopien erzielt werden.

In der DE-B-1,300,003 wird darauf hingewiesen, dass es bei Monochrom- und Farbauszugverfahren und insbesondere beim Kopieren durch Halbton-Bildfelder möglich ist, die Gradation eines fotografischen Materials (Platte, Papier) durch eine diffuse Belichtung zusätzlich zur bildmässigen Hauptbelichtung zu beeinflussen. Diese zusätzliche Belichtung kann von derselben Dauer sein wie die Hauptbelichtung. Die Hauptbelichtung wird durch die hellsten Teile des wiedergegebenen Bildes bestimmt, die Zusatzbelichtung durch die Schattenpartien des Bildes.

In der DE-C-2,219,849 wird vorgeschlagen, für die fotografische Reproduktion von Raster- oder Halbtonvorlagen in Schwarz-Weiss- und in Farbtechnik und insbesondere zur Anfertigung von Farbauszügen (Auswahlnegativen) zusätzlich zur normalen Belichtung eine weitere Belichtung mit gleichmässiger Beleuchtungsstärke vorzunehmen. Weitere Einzelheiten zu diesem Verfahren sind der Druckschrift nicht zu entnehmen.

In der CH-A-483 034 ist ein Verfahren und eine Vorrichtung zur kontrastabhängigen selbsttätigen Steuerung der Belichtung bei einem Kopiergerät beschrieben. Bei dem beschriebenen Verfahren zur Anwendung in der Schwarz-Weiss Fotografie wird abhängig vom Wert des Logarithmus des Kontrastumfangs des Negatives im Vergleich zum Kopierumfang des Fotopapiers entweder gar nicht oder maximal oder nach Massgabe des Logarithmus des Kontrastumfangs zusatzbelichtet. Die eigentliche Bildbelichtung wird dabei entweder in Abhängigkeit vom Kontrast des Negativs und der Leuchtdichte des hellsten Bildpunkts oder nur in Abhängigkeit von der Leuchtdichte des hellsten Bildpunktes gesteuert.

Aus der JP-A-60-182433 (Abstract) ist ein Farbkopierverfahren bekannt, bei dem die Vorlage in den drei Grundfarben Rot, Grün und Blau ausgemessen wird, und bei dem nach Massgabe der ermittelten Messdaten Kopierlichtmengen bestimmt werden. Drei zusätzliche Lichtquellen werden dazu verwendet, mit Hilfe von diffusen Zusatzbelichtungen in den drei Grundfarben den Kontrast der Vorlage zu korrigieren. Über das Verfahren zur Bestimmung der erforderlichen Lichtmengen für die Zusatzbelichtungen ist nichts näheres ausgeführt, jedoch scheint der Kontrastumfang der Vorlage eine gewisse Rolle zu spielen.

In den zitierten Druckschriften wird zwar darauf hingewiesen, dass es in der Schwarz-Weiss Fotografie, in der Farbfotografie, bei der fotografischen Reproduktion von Raster- oder Halbtonvorlagen und zur Anfertigung von Auswahlnegativen (Farbauszügen) prinzipiell möglich ist, die Gradationseigenschaften der fotografischen Materialien (Platten, Papiere) durch eine Belichtung zusätzlich zur normalen Bildbelichtung zu beeinflussen; den Druckschriften ist jedoch kein Hinweis auf ein Verfahren zur Erstellung von farblich akzeptablen und detailgetreuen farbigen Kopien von kontrastreichen Vorlagen zu entnehmen.

Es ist daher Aufgabe der vorliegenden Erfindung ein Belichtungssteuerungsverfahren in einem fotografischen Farbkopiergerät dahingehend zu verbessern, dass damit farblich und bezüglich ihres Kontrastes akzeptable und detailgetreue Farbkopien von kontrastreichen Kopiervorlagen erstellt werden können. Insbesondere soll ein Verfahren geschaffen werden, welches auch im Falle von Problemaufnahmen, wie beispielsweise Blitzlichtszenen oder Gegenlichtszenen, zumindest akzeptable Kopien liefert. Das Verfahren soll es weiters erlauben, farbige Kopien farblich, dichte- und gradationsmässig nach Wunsch zu beeinflussen. Darüber hinaus soll das Verfahren einfach in der Anwendbarkeit sein und eine verhältnismässig einfache Verknüpfung mit bestehenden Belichtungssteuerungsverfahren, wie sie beispielsweise in der EP-A-312,499 beschrieben sind, erlauben. Eine weitere Aufgabe der Erfindung besteht auch darin, ein Belichtungssteuerungsverfahren dahingehend zu verbessern, dass auch farblich korrekte Farbkopien von Kopiervorlagen erstellt werden können, bei denen auf Grund ihres grossen Kontrastumfanges die Gefahr besteht, dass in den erstellten Farbkopien die Lichter und die Schatten mit unterschiedlichen Farbstichen reproduziert werden. Dieses Problem, auch Kippverhalten genannt, welches bei den üblicherweise verwendeten Farbfilmen und Farbpapieren relativ oft auftritt, ist darauf zurückzuführen, dass die linearen Abschnitte der einzelnen Farbdichtekurven nicht immer parallel verlaufen, der Farbfilm bzw. das Farbpapier in den einzelnen sensibilisierten Spektralbereichen somit eine unterschiedliche Gradation aufweist.

Die Lösung dieser Aufgaben erfolgt durch ein Verfahren zur Erstellung von fotografischen Farbkopien gemäss Kennzeichen des Patentanspruchs 1. Besonders vorteilhafte Ausführungsformen des Verfahrens und Weiterbildungen sind Gegenstand der abhängigen Patentansprüche.

Im folgenden werden das erfindungsgemässe Verfahren und seine Ausführungsformen anhand der Zeichnungen näher erläutert. Es zeigen in zum Teil schematischer Darstellung:
- Fig. 1: ein fotografisches Farbkopiergerät zur Durchführung des Verfahrens,
- Fig. 2 und 3: Ausführungsbeispiele einer Belichtungsstation,
- Fig. 4: Farbdichtekurvenverläufe eines Farbkopiermaterials,
- Fig. 5: den Einfluss einer Zusatzbelichtung auf den Farbdichtekurvenverlauf,
- Fig. 6: die Abhängigkeit der Steilheit des linearen Bereiches der Farbdichtekurve aus Fig. 3 vom Zusatzbelichtungsgrad,
- Fig. 7: ein skizzenhaftes Beispiel einer kontrastreichen Kopiervorlage mit angedeuteten Abtastbereichen und konzentrischen Zonen,
- Fig. 8: ein skizzenhaftes Beispiel einer Blitzlichtaufnahme,
- Fig. 9: ein skizzenhaftes Beispiel einer Gegenlichtaufnahme,
- Fig. 10: Farbdichtekurvenverläufe eines typischen Farbkopiermaterials ohne Zusatzbelichtungen,
- Fig. 11: Farbdichtekurvenverläufe des Farbkopiermaterials aus Fig. 10 mit Zusatzbelichtungen und
- Fig. 12: eine aus Analysewerten genäherte Farbdichtekurve einer Kopiervorlage.

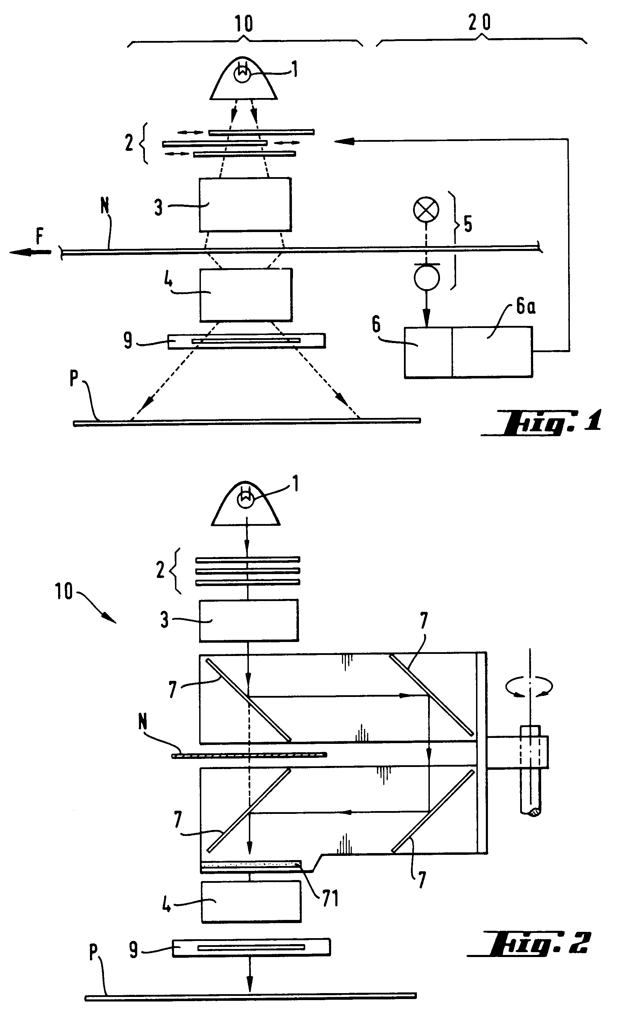

Das in Fig. 1 dargestellte fotografische Farbkopiergerät umfasst im wesentlichen zwei Stationen, und zwar eine Messstation und eine Belichtungsstation, welche von einer vorzugsweise streifenförmigen Kopiervorlage N, üblicherweise einem Negativfilm, hintereinander durchlaufen werden. Die Transportrichtung ist durch den Pfeil F angedeutet. In der Messstation 20 erfolgt die Abtastung, Ausmessung und Analyse der Kopiervorlage N, in der Belichtungsstation 10 wird die Kopiervorlage N auf lichtempfindliches Farbkopiermaterial P, üblicherweise sog. Farbpapier, abgebildet.

Mit Ausnahme der noch zu erklärenden Unterschiede im Aufbau der Belichtungsstation 10 ist das fotografische Farbkopiergerät aufgebaut wie herkömmliche Geräte dieser Art, beispielsweise etwa die aus den US-PS Nr. US-A-4,092,067, US-A-4,101,216 und US-A-4,279,505 oder der publizierten europäischen Patentanmeldung EP-A-312,499 bekannten. In Fig. 1 sind daher auch nur die wesentlichen, für das Verständnis der Erfindung notwendigen Komponenten eines solchen Farbkopiergerätes dargestellt. Es umfasst in der Messstation 20 eine eine Messlichtquelle und fotoelektrische Detektoren beinhaltende Messanordnung 5 und in der Belichtungsstation 10 eine Kopierlichtquelle 1, einen Satz servogesteuerten Farbfilter 2 oder ähnliches, eine Abbildungsanordnung 3, 4 und einen Verschluss 9. Eine Rechen- und Steuereinheit 6, 6a für die Auswertung der Messdaten und die Belichtungssteuerung ist sowohl der Messstation 20 als auch der Belichtungsstation 10 zugeordnet.

Fotografische Farbkopiergeräte dieses prinzipiellen Aufbaus sind beispielsweise die weltweit eingesetzten Hochleistungsprinter Modelle 3139, 3140 und 3141 der Fa. Gretag Aktiengesellschaft, Regensdorf, Schweiz. Bei den genannten Hochleistungsprintern erfolgt die Ausmessung der Kopiervorlage N bereichsweise, beispielsweise mit einer Auflösung von rund 100 Abtastbereichen S (Punkten) je Vorlage und mehr. Jeder Abtastbereich S wird in mehrere Spektralbereiche, insbesondere in die drei Grundfarben Blau B, Grün G und Rot R, zerlegt, und aus den spektralen Messwerten werden sogenannte Farbauszugswerte für die Spektralbereiche bestimmt, wobei die spektralen Messempfindlichkeiten näherungsweise den spektralen Empfindlichkeiten des Kopiermaterials P entsprechen. Diese üblicherweise etwa 300 und mehr Farbauszugswerte werden sodann auf an sich bekannte Weise nach verschiedenen Kriterien zur Bestimmung der erforderlichen Kopierlichtmengen L ausgewertet und danach die Belichtung des lichtempfindlichen Farbkopiermaterials P gesteuert. Beispiele für diese Auswertung und Bestimmung der erforderlichen Kopierlichtmengen L finden sich in der US-A-4,279,505 und der EP-A-312,499.

In Fig. 4 sind die Farbdichtekurvenverläufe eines Farbkopiermaterials P dargestellt. Es weist idealerweise parallel verlaufende Farbdichtekurvenverläufe D der für den jeweiligen Spektralbereich, hier Blau B, Grün G, Rot R, sensibilisierten Farbstoffschichten auf. Auf der horizontalen Achse, der Abszisse, ist der Logarithmus der Belichtung, des Produktes aus Lichtintensität und Belichtungszeit, aufgetragen und auf der vertikalen Achse, der Ordinate, die resultierende densitometrische Farbdichte. Die einzelnen Abschnitte jeder dieser Farbdichtekurven D werden in Richtung steigender Belichtung als Kurvenfuss C, geradliniger Bereich M und Schulter T bezeichnet. Die Schnittpunkte der Kurven D mit der Ordinate geben den jeweiligen Schleierwert H des Farbkopiermaterials P an. Der lineare Bereich M und insbesondere seine Steilheit, welche auch als Gradation bezeichnet wird, definieren den zur Verfügung stehenden spektralen Belichtungsspielraum und das Ausmass der Farbdichteänderung bei einer bestimmten Belichtungsänderung.

Bei guten Farbkopiermaterialien P unterscheiden sich die Farbdichtekurvenverläufe D qualitativ nur wenig, weshalb im folgenden auch nur ein einziger Farbdichtekurvenverlauf betrachtet wird.

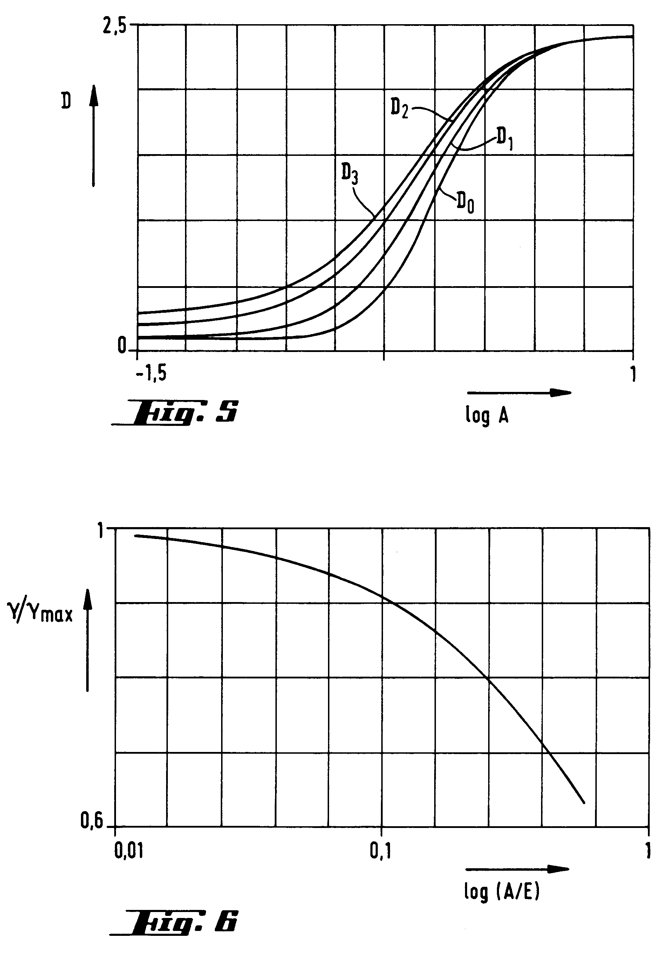

In Fig. 5 ist der Einfluss einer diffusen Zusatzbelichtung A auf den Farbdichtekurvenverlauf D dargestellt. Die Bedeutung der Achsen des Diagrammes entspricht der in Fig. 4. Die verschiedenen Farbdichtekurvenverläufe Dₒ bis D₃ sind eine Folge der unterschiedlich starken diffusen Zusatzbelichtungen. Die im Diagramm unterste Kurve Dₒ entspricht dem normalen Farbdichtekurvenverlauf ohne Zusatzbelichtung. Bei einer Farbdichte von 1 beträgt die Steilheit γ des linearen Bereiches der untersten Kurve Dₒ beispielsweise 3,1, während die Steilheit der obersten Kurve D₃ bei gleicher Farbdichte nur noch 1,7 beträgt. Durch eine Variation des Grades der Zusatzbelichtung, welcher als das Verhältnis zwischen der diffusen Zusatzbelichtung A und der bildmässigen Belichtung E zu verstehen ist, lässt sich die Gradation erheblich beeinflussen und verringern.

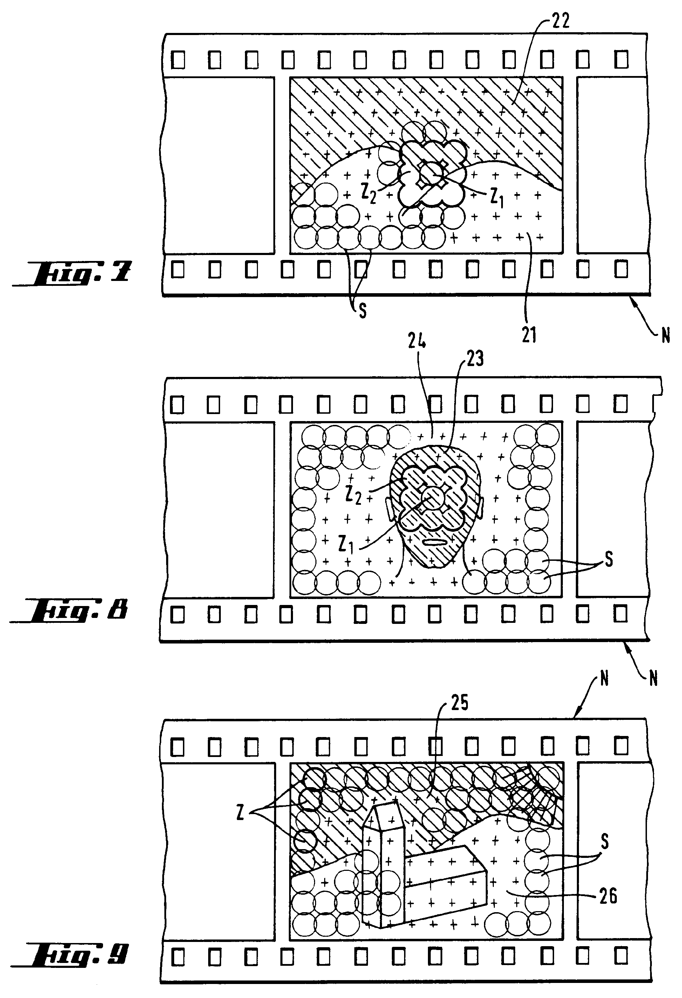

Fig. 6 stellt die Abhängigkeit der Steilheit des linearen Bereiches der Farbdichtekurve aus Fig. 5, der Gradation, vom Grad der Zusatzbelichtung grafisch dar. Dabei ist auf der horizontalen Achse der Zusatzbelichtungsgrad A/E aufgetragen und auf der vertikalen Achse das Verhältnis der Steilheit γ zur maximalen Steilheit γₘₐₓ der Farbdichtekurve D. Als Parameter wurde eine konstante Farbdichte von 1 gewählt, d.h. eine konstante Gesamtbelichtung. Während sich die diffuse Zusatzbelichtung A im Bereich der Schulter T der Farbdichtekurve D kaum auswirkt, tritt im Bereich des Kurvenflusses C ab einem gewissen Grad an Zusatzbelichtung eine deutliche Erhöhung des Schleierwertes H auf, wie den beiden obersten Farbdichtekurven D₂, D₃ in Fig. 5 entnommen werden kann. Diese Erhöhung des Schleierwertes H ist zwar an sich bei der Wiedergabe insbesondere von weissen Gegensständen (z.B. Tischtuch, Hemd) unerwünscht, kann aber andererseits gezielt für eine farbliche Beeinflussung der Farbkopie genutzt werden.

Bei der Erstellung einer farblich und bezüglich ihres Kontrastes akzeptablen und detailgetreuen Farbkopie von einer kontrastreichen Kopiervorlage N wird daher die Kopiervorlage N gemäss dem Grundgedanken der Erfindung zusätzlich zur üblichen Analyse zur Bestimmung der Kopierlichtmengen auch noch bezüglich ihres Kontrastumfanges in den einzelnen Spektralbereichen untersucht. Für jeden Spektralbereich B, G, R werden sodann nach Massgabe des ermittelten Kontrastumfangs Lichtmengen für die diffusen Zusatzbelichtungen A bestimmt. Als Basis für die Berechnungen der notwendigen Lichtmengen dienen beispielsweise die bekannten Farbdichtekurvenverläufe D des Farbkopiermaterials P (Fig. 4) und die Abhängigkeit der Steilheit γ der linearen Bereiche M der Farbdichtekurven D vom Grad der Zusatzbelichtung A (Fig. 6). Zur Beeinflussung der Farbdichtekurvenverläufe D wird das Farbkopiermaterial P sodann mit den ermittelten diffusen Zusatzbelichtungen A beaufschlagt. Durch gezielte Wahl des Zusatzbelichtungsgrades lässt sich der spektrale Schleierwert H der jeweiligen Farbdichtekurve D verändern und damit der farbliche Eindruck der Kopie gezielt beeinflussen.

Vorzugsweise werden die für die diffusen Zusatzbelichtungen A ermittelten Lichtmengen von den erforderlichen Kopierlichtmengen L abgezogen, sodass die eigentlichen Bildbelichtungen E in den jeweiligen Spektralbereichen mit den derart verminderten Lichtmengen durchgeführt werden, so dass gilt E = L - A. Auf diese Weise bleibt die Gesamtbelichtung, d.h. die Summe der beiden Belichtungen unabhängig vom jeweiligen Grad der Zusatzbelichtung in den Spektralbereichen gleich gross. Dies dient dazu, den Einfluss der diffusen Zusatzbelichtungen A auf den farblichen und dichtemässigen Eindruck der Farbkopie möglichst gering zu halten.

Die Zusatzbelichtungen A können vor, während oder nach den Bildbelichtungen E erfolgen. Entsprechend kann das fotografische Farbkopiergerät auch eine Vor- oder eine Nachbelichtungsstation aufweisen. Vorzugsweise erfolgen jedoch die diffusen Zusatzbelichtungen A in der Belichtungsstation 10, in der auch die bildmässigen Belichtungen E erfolgen. Um jegliche farbliche Verfälschung der Farbkopie durch die Zusatzbelichtungen A zu vermeiden, wird gemäss einem weiteren Aspekt der Erfindung die mittlere spektrale Zusammensetzung der Zusatzbelichtungen A an die mittlere spektrale Zusammensetzung der zugehörigen Bildbelichtungen E angeglichen. Dazu erfolgen auch die diffusen Zusatzbelichtungen A durch steuerbare Farbfilter oder ähnliches. In der Regel erfolgt bei der Bildbelichtung E keine gleichmässige Ausleuchtung der Kopiervorlage N, üblicherweise erfolgt sie mit einer gegen den Rand hin (gewollt) abnehmenden Lichtintensität. Vorzugsweise wird daher die flächenmässige Lichtintensitätsverteilung der diffusen Zusatzbelichtungen A in den Randbereichen an die der Bildbelichtungen E angeglichen. Mit Ausnahme dieses gewollten Randabfalles wird die Ausleuchtung der diffusen Zusatzbelichtungen A jedoch im wesentlichen homogen gehalten.

Besonders vorteilhaft für die Schaffung gleicher spektraler und intensitätsverteilungsmässiger Bedingungen für die Bildbelichtungen E und die diffusen Zusatzbelichtungen A ist die Verwendung einer einzigen gemeinsamen Kopierlichtquelle 1 in der Belichtungsstation 10, sowie die Durchführung der diffusen Zusatzbelichtungen A durch die Farbfilter 2 oder ähnliches für die spektralen Bildbelichtungen E.

Zur Durchführung der diffusen Zusatzbelichtungen A in der Belichtungsstation 10 kann die Kopiervorlage N aus dem Strahlengang der Kopierlichtquelle 1 entfernt werden. Zur Homogenisierung der diffusen Zusatzbelichtung wird statt dessen ein örtlich homogenes, vorzugsweise Licht streuendes Element, beispielsweise eine Streuscheibe in den Strahlengang eingeschwenkt. Dieses eher manuelle Verfahren zur Durchführung der diffusen Zusatzbelichtungen A eignet sich insbesondere für den Fotoamateur oder für Spezialaufnahmen mit geringen Anzahlen von Kopien (Farbprinter). Der Vorgang des Ersetzens der Kopiervorlage N durch beispielsweise eine Streuscheibe kann aber auch automatisiert werden. Zu diesem Zweck könnte beispielsweise die Filmbühne mechanisch verschiebbar ausgebildet sein, derart, dass beim Verschieben der Filmbühne aus dem Strahlengang der Kopierlichtquelle 1 automatisch die Streuscheibe eingeschwenkt wird.

Eine besonders zweckmässige und einfache Ausbildung der Belichtungsstation zur Durchführung des erfindungsgemässen Verfahrens ist in Fig. 2 dargestellt. Bei diesem Ausführungsbeispiel umfasst die Belichtungsstation zusätzlich zu der Kopierlichtquelle 1, den servogesteuerten Farbfiltern 2, der Abbildungsanordnung 3, 4 und dem Verschluss 9 noch eine Anzahl von in den Strahlengang der Kopierlichtquelle 1 einschwenkbaren Umlenkspiegeln 7. Die Umlenkspiegel 7 sind derart ober- bzw. unterhalb der Kopiervorlage N einschwenkbar, dass damit das durch die Filter 2 hindurchtretende Licht der Kopierlichtquelle 1 an der Kopiervorlage N vorbei auf das fotografische Farbkopiermaterial P geleitet wird. Anstatt der Umlenkspiegel 7 können auch Umlenkprismen oder ähnliches vorgesehen sein. Zur Erhöhung der flächenmässigen Homogenität des eingestrahlten Lichtes kann auch noch ein Streuelement oberhalb des Kopiermaterials P einschwenkbar sein, vorzugsweise gekoppelt mit den Umlenkmitteln.

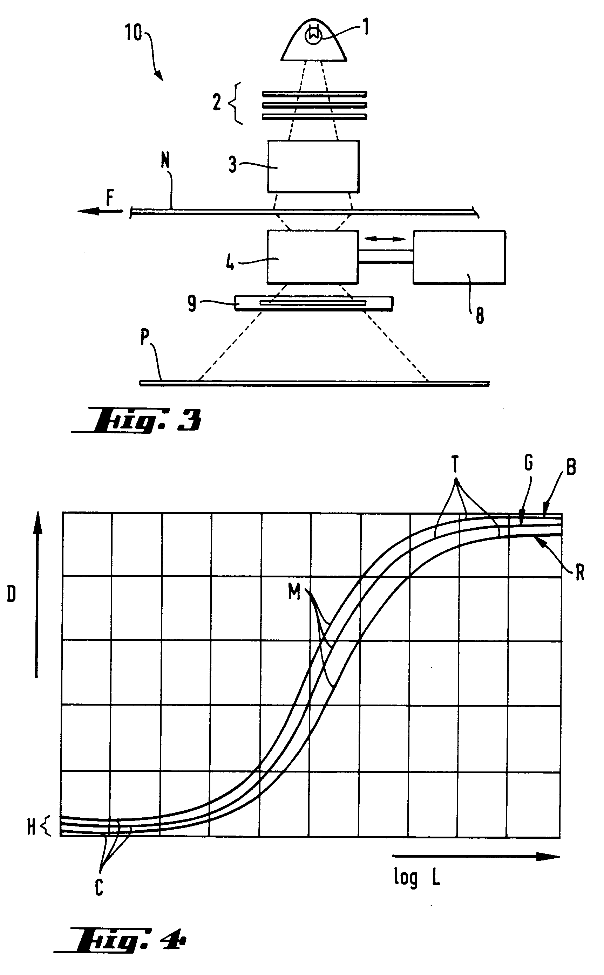

Bei dem in Fig. 3 schematisch dargestellten weiteren Ausführungsbeispiel einer Belichtungsstation 10 zur Durchführung des erfindungsgemässen Verfahrens ist der unterhalb der Kopiervorlage N angeordnete Teil der Abbildungsanordnung 4 verschiebbar ausgebildet und mit einer Lichtmischereinrichtung 8 gekoppelt. Die Lichtmischereinrichtung 8, welche vorzugsweise einen Spiegelschacht und/oder Streuscheiben und/oder fiberoptische Elemente umfasst, wird an Stelle des unteren Teils der Abbildungsanordnung 4 in den Strahlengang eingebracht. Das Licht für die Zusatzbelichtungen A passiert sowohl die Farbfilter 2 als auch die Kopiervorlage N und erfährt auf diese Weise dieselbe spektrale Beeinflussung wie das Licht für die Bildbelichtungen E. Mit Hilfe der Lichtmischereinrichtung wird das Licht für die diffusen Zusatzbelichtungen A vor dem Auftreffen auf das Farbkopiermaterial P noch spektral und intensitätsmässig homogenisiert.

Bei den bisher beschriebenen Varianten zur Durchführung der Zusatzbelichtungen A erfolgen diese auf der mit der lichtempfindlichen Emulsion beschichteten Seite des Kopiermaterials P. Bei Verwendung eines Farbkopiermaterials P mit beispielsweise transparenter Trägerschicht könnten die Zusatzbelichtungen aber auch durch die Rückseite erfolgen.

In Fig. 7 ist ein Beispiel für eine kontrastreiche Kopiervorlage N skizziert. Die dargestellte Kopiervorlage weist sehr helle 21, aber auch sehr dunkle Bereiche 22, schraffiert angedeutet, auf. Entsprechend werden diese Bereiche bei der Analyse der Kopiervorlage N als Bereiche sehr geringer bzw. sehr grosser Farbdichte identifiziert. Ebenfalls angedeutet in Fig. 7 sind die Abtastbereiche S. Die Kopiervorlage N wird in der Messstation 20 einerseits spektral analysiert um die Kopierlichtmengen für die bildmässigen Belichtungen zu ermitteln, wie beispielsweise in der US-A-4,279,505 und der EP-A-312,499 beschrieben. Zur Ermittlung des Kontrastumfanges andererseits wird die Kopiervorlage N auch bezüglich ihrer geringsten und grössten Farbdichtewerte untersucht. Dazu werden die einzelnen Abtastbereiche S zu zusammenhängenden Zonen Z zusammengefasst. Vorzugsweise werden diese Zonen Z etwa konzentrisch gewählt. In jeder Zone Z wird für jeden Spektralbereich ein Kontrastwert als Differenz zwischen dem jeweiligen grössten und dem kleinsten Farbdichtewert bestimmt. Diese spektralen Zonenkontrastwerte werden vorzugsweise mittenbetont gewichtet gemittelt. Der auf diese Weise erhaltene Mittelwert ist der Kontrastumfang der Kopiervorlage N im jeweiligen Spektralbereich, beispielsweise Blau B, Grün G oder Rot R. Der Kontrastumfang jedes Spektralbereiches wird daraufhin mit dem nutzbaren Belichtungsumfang der zugehörigen sensibilisierten Farbstoffschicht des Kopiermaterials P verglichen. Der nutzbare spektrale Belichtungsumfang wird einfach aus den bekannten Farbdichtekurven D bestimmt und ergibt sich als Differenz der grössten und der kleinsten Farbdichten der linearen Kurvenabschnitte M. Abhängig von dem Ausmass, in dem der Kontrastumfang jedes Spektralbereiches den spektralen Belichtungsumfang überschreitet, wird aus dem bekannten Zusammenhang zwischen dem Zusatzbelichtungsgrad und der Steilheit des linearen Abschnittes M der jeweiligen Farbdichtekurve D (Fig. 6) die nötige Lichtmenge für die Zusatzbelichtungen A ermittelt. Dabei wird darauf geachtet, dass bei maximaler Zusatzbelichtung A die Gesamtsteigung γ der linearen Farbdichtekurvenabschnitte M der Kopiervorlage N und des Farbkopiermaterials P den Wert 1 nicht unterschreitet. Der Zusatzbelichtungsgrad kann für jede Kopiervorlage N neu bestimmt werden; in der Mehrzahl der Fälle reicht es jedoch aus, bei Ueberschreitung des nutzbaren Belichtungsumfanges des verwendeten Farbkopiermaterials für jeden Spektralbereich einen festen Grad an Zusatzbelichtung zu wählen, welcher zuvor durch eine Analyse einer Anzahl von kontrastreichen Kopiervorlagen N bestimmt wurde. Oftmals reicht es sogar aus, für jeden Spektralbereich denselben Zusatzbelichtungsgrad zu wählen.

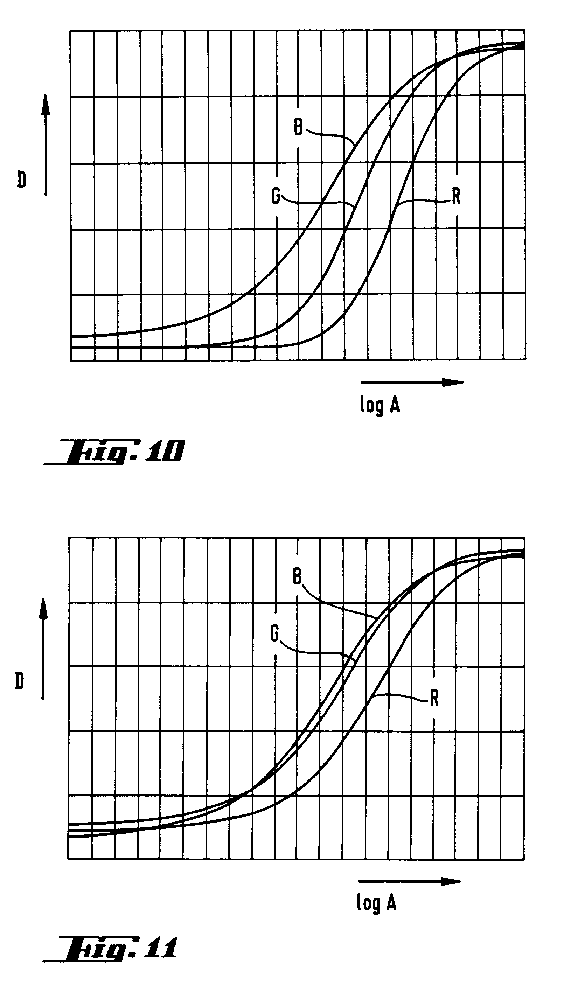

In Fig. 8 ist symbolisch eine Blitzlichtaufnahme skizziert. Kopiervorlagen N von Blitzlichtaufnahmen weisen üblicherweise im zentralen Bereich 23 grosse Farbdichten auf, sind also dunkel, während die peripheren Bereiche 24 eine relativ kleine Farbdichte besitzen, somit also sehr hell erscheinen. Die dunklen Bereiche sind in Fig. 8 schraffiert angedeutet. In der Messstation 20 wird die Kopiervorlage N bereichsweise abgetastet. Die Abtastbereiche S sind in Fig. 8 angedeutet. Die Bestimmung der erforderlichen Kopierlichtmengen erfolgt auf an sich bekannte Art, wie beispielsweise in der US-A-4,279,505 oder der EP-A-312,499 beschrieben. Zur Ermittlung des Kontrastumfanges der Kopiervorlage N für jeden Spektralbereich werden die Abtastbereiche S zu zusammenhängenden Zonen Z zusammengefasst. Vorzugsweise werden konzentrische Zonen Z gebildet. Innerhalb jeder Zone Z werden die Dichtewerte jedes Spektralbereiches B, G, R gemittelt. Die mitttleren spektralen Zonendichtewerte der zentralen 24 Zonen Z werden erneut gemittelt, desgleichen die mittleren spektralen Zonendichtewerte der peripheren 2-4 Zonen Z. Den jeweiligen spektralen Kontrastumfang erhält man als Differenz der derart über die peripheren und die zentralen Zonen gemittelten mittleren spektralen Zonendichtewerte. Der Kontrastumfang jedes Spektralbereiches wird daraufhin mit dem nutzbaren Belichtungsumfang der zugehörigen sensibilisierten Farbschicht des Kopiermaterials P verglichen. Der nutzbare spektrale Belichtungsumfang wird einfach aus den bekannten Farbdichtekurven D bestimmt und ergibt sich als Differenz der grössten und der kleinsten Farbdichten der linearen Kurvenabschnitte M. Abhängig von dem Ausmass, in dem der Kontrastumfang jedes Spektralbereiches den spektralen Belichtungsumfang überschreitet, wird aus dem bekannten Zusammenhang zwischen dem Zusatzbelichtungsgrad und der Steilheit des linearen Abschnittes M der jeweiligen Farbdichtekurve D (Fig. 6) die nötige Lichtmenge für die Zusatzbelichtungen A ermittelt. Der Zusatzbelichtungsgrad im längerwelligen Spektralbereich, beispielsweise in Rot R, wird jedoch gegenüber den anderen Spektralbereichen, beispielsweise Blau B und Grün G, um etwa 30 % - 70 %, vorzugsweise um etwa 50 %, reduziert. Auf diese Weise wird beispielsweise bei Blitzlichtportraits eine farblich wärmere Wiedergabe der im Vergleich zum Rest des Bildes überbelichteten Hauttöne erzielt. Bei der Bestimmung des Zusatzbelichtungsgrades für die einzelnen Spektralbereiche wird darauf geachtet, dass bei minimaler Zusatzbelichtung A die Gesamtsteigung γ der linearen Farbdichtekurvenabschnitte M der Kopiervorlage N und des Farbkopiermaterials P den Wert 1 nicht unterschreitet. Der Zusatzbelichtungsgrad kann für jede Kopiervorlage N neu bestimmt werden; in der Mehrzahl der Fälle reicht es jedoch aus bei Ueberschreitung des nutzbaren Belichtungsumfanges des verwendeten Farbkopiermaterials für jeden Spektralbereich einen festen Grad an Zusätzbelichtung zu wählen, welcher zuvor durch eine Analyse einer Anzahl von kontrastreichen Kopiervorlagen N bestimmt wurde. Meist erzielt man auch bereits befriedigende Ergebnisse, wenn man für die kürzerwelligen Spektralbereiche, hier beispielsweise für Blau B und Grün G, denselben Zusatzbelichtungsgrad wählt.

In Fig. 9 ist symbolisch ein Beispiel einer Gegenlichtaufnahme dargestellt. Gegenlichtaufnahmen weisen üblicherweise mehr oder weniger ausgedehnte Himmelpartien 25 auf, welche auf der Kopiervorlage N im Vergleich zu den bildwichtigen Partien 26 stark überbelichtet erscheinen, also gegenüber diesen Bereichen geringerer Farbdichte eine sehr grosse Dichte besitzen. Diese dunklen Bereiche 25 sind in Fig. 9 durch Schraffur angedeutet. In der Messstation 20 wird die Kopiervorlage N bereichsweise abgetastet. Die einzelnen Abtastbereiche S sind in Fig. 9 angedeutet. Die Bestimmung der erforderlichen Kopierlichtmengen erfolgt auf an sich bekannte Art, wie beispielsweise in der US-A-4,279,505 oder der EP-A-312,499 beschrieben. Zur Ermittlung des Kontrastumfangs der Kopiervorlage N für jeden untersuchten Spektralbereich werden die zugehörigen Farbdichten der einzelnen Abtastbereiche S miteinander verglichen. Im kurwelligen Spektralbereich, hier beispielsweise für die Farbe Blau B, werden alle jene Abtastbereiche S zu zusammenhängenden Zonen Z zusammengefasst, deren Dichtewerte für Blau B einen Schwellenwert überschreiten und sich beginnend von den peripheren Abtastbereichen S gegen das Innere der Kopiervorlage N erstrecken. Der Schwellenwert wird vorzugsweise bei etwa ²/₃ des Dichteintervalls zwischen dem minimalen und dem maximalen Dichtewert festgelegt. Er kann aber je nach Bedarf auch zu grösseren oder kleineren Dichtewerten hin verschoben werden. Die Farbdichtewerte in den derart ermittelten zusammenhängenden Zonen Z werden daraufhin (rechnerisch) reduziert, vorzugsweise auf das 0,6-0,8fache ihres ursprünglichen Wertes, wobei jedoch darauf geachtet wird, dass der reduzierte Farbdichtewert nicht kleiner als der minimale gemessene Farbdichtewert ist. Damit wirken sich "Himmelspartien" nur in reduziertem Ausmass auf die Belichtung aus. Der spektrale Kontrastumfang in den einzelnen Spektralbereichen, hier in den Farben Blau B, Grün G und Rot R, wird als Differenz zwischen den zugehörigen grössten und kleinsten Farbdichtewerten bestimmt. Der Kontrastumfang jedes Spektralbereiches wird daraufhin mit dem nutzbaren Belichtungsumfang der zugehörigen sensibilisierten Farbschicht des Kopiermaterials P verglichen. Der nutzbare spektrale Belichtungsumfang wird einfach aus den bekannten Farbdichtekurven D bestimmt und ergibt sich als Differenz der grössten und der kleinsten Farbdichten der linearen Kurvenabschnitte M. Abhängig von dem Ausmass, in dem der Kontrastumfang jedes Spektralbereiches den spektralen Belichtungsumfang überschreitet, wird aus dem bekannten Zusammenhang zwischen dem Zusatzbelichtungsgrad und der Steilheit des linearen Abschnittes M der jeweiligen Farbdichtekurve D (Fig. 6) die nötige Lichtmenge für die Zusatzbelichtungen A ermittelt.

Der Zusatzbelichtungsgrad kann für jede Kopiervorlage N neu bestimmt werden; in der Mehrzahl der Fälle reicht es jedoch aus, bei Ueberschreitung des nutzbaren Belichtungsumfanges des verwendeten Farbkopiermaterials für jeden Spektralbereich einen festen Grad an Zusatzbelichtung zu wählen, welcher zuvor durch eine Analyse einer Anzahl von kontrastreichen Kopiervorlagen N bestimmt wurde. Bei Kopiervorlagen N, deren zusammenhängende Zonen Z für den kurzwelligen Spektralbereich, hier für die Farbe Blau B, mehr als etwa 15 % - 30 %, vorzugsweise 20 %, der gesamten Abtastbereiche S umfassen, wird der Grad an Zusatzbelichtung im längerwelligen Spektralbereich, hier in der Farbe Rot R, gegenüber den anderen Spektralbereichen, hier Blau B und Grün G, um etwa 30 % - 70 %, vorzugsweise etwa 50 %, erhöht, womit eine stärkere farbliche Sättigung der "Himmelspartien" erreicht wird. Dabei reicht es üblicherweise aus, wenn für die kürzerwelligen Spektralbereiche, in diesem Fall für Blau B und Grün G, derselbe Zusatzbelichtungsgrad gewählt wird.

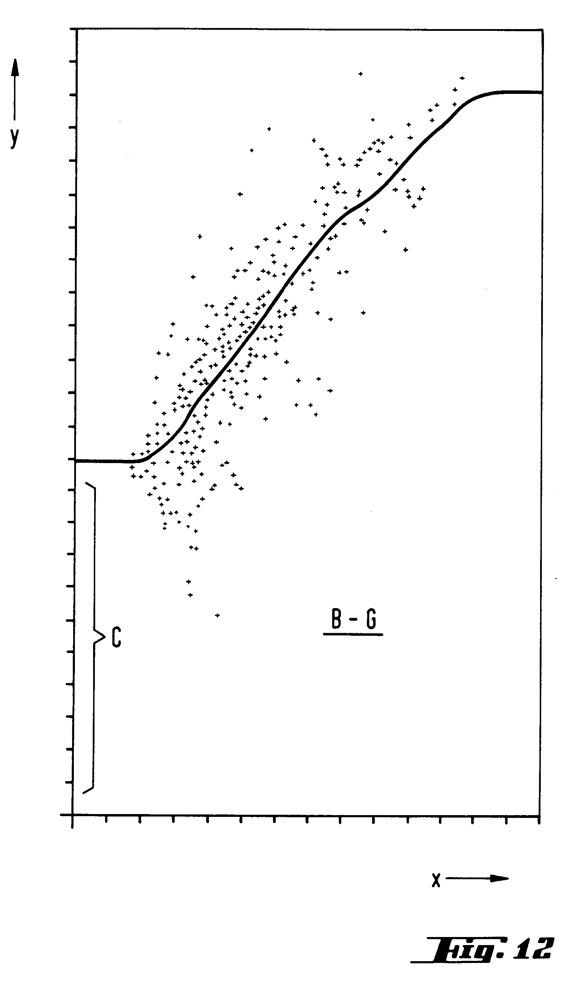

In Fig. 10 und 11 sind Farbdichtekurvenverläufe D eines Farbkopiermaterials P angegeben, welches Kipperscheinungen verursacht. In Fig. 10 sind die Farbdichitekurven D des für die Farben Blau B, Grün G und Rot R sensibilisierten Kopiermaterials P ohne Zusatzbelichtung A dargestellt. Die Kurvenverläufe in Fig. 11 ergeben sich für dasselbe Kopiermaterial bei einem bestimmten Grad an Zusatzbelichtung. Aus den Farbdichtekurven ohne Zusatzbelichtung ist ersichtlich, dass die linearen Bereiche M unterschiedlich steil sind, das Farbkopiermaterial somit für jede Farbe eine andere Gradation aufweist.

Um zu vermeiden, dass eine Kopie auf derartigem Farbkopiermaterial P je nach Umfang der Belichtung in den Lichtern und in den Schatten komplementäre Farbstiche erhält, werden die steileren Farbdichtekurven an die Steigung der flachsten Kurve angepasst. Dazu wird das Kopiermaterial P mit Licht des der jeweiligen steileren Kurve zugehörigen Spektralbereiches diffus zusatzbelichtet. Die Ermittlung der erforderlichen Lichtmengen für derartige diffuse Zusatzbelichtungen A erfolgt vorzugsweise durch Testkopien von Graukeilen, bei denen der Grad an Zusatzbelichtung solange variiert wird, bis die Kopie des Graukeils farblich ausgewogen erscheint. Die erforderlichen Lichtmengen können aber auch aus den zuvor ermittelten Zusammenhängen zwischen der Steilheit des linearen Abschnittes M der jeweiligen Farbdichtekurve D des Kopiermaterials P und dem Grad der diffusen Zusatzbelichtung (Fig. 6) ermittelt werden.

Fig. 12 zeigt einen beispielsweisen Farbdichteverlauf einer Kopiervorlage N, der näherungsweise aus einer Analyse der Messdaten bestimmt werden kann. Um auch von in den Bereichen grosser und kleiner Farbdichte unterschiedlich farbstichigen Kopiervorlagen N akzeptable Kopien erstellen zu können, wird die Kopiervorlage N nach sogenanntem Kippen der Farben untersucht. Je nach dem Umfang, in dem in den mehr oder weniger dichten Bereichen bestimmte Spektralbereiche vorherrschen, werden Lichtmengen für diffuse Zusatzbelichtungen A in den respektiven Spektralbereichen bestimmt, und wird das Kopiermaterial P mit den bestimmten Lichtmengen A diffus zusatzbelichtet. Zur Bestimmung des Kippverhaltens werden die einzelnen Farbdichtewerte jedes Abtastbereiches S einer Neutraldichte des Abtastbereiches S gegenübergestellt. Diese Neutraldichte ergibt sich als Mittelwert aller Farbdichten des jeweiligen Abtastbereiches S. Für jeden Spektralbereich wird die Gesamtzahl dieser Wertepaare (Farbdichtewerte der Abtastbereiche und zugehörige Neutraldichten) der Kopiervorlage N einer nichtlinearen Regressionsanalyse unterzogen. Vorzugsweise wird ein kubischer Fit des Typs y = a₁x³+a₂x²a₃x+c gewählt, wobei y für die spektrale Dichte steht, x für die Neutraldichte, c eine Art Grundschleier und a₁, a₂ und a₃ die gesuchten Koeffizienten darstellen. Diese Analyse kann für jeden Spektralbereich getrennt durchgeführt werden, vorzugsweise werden jedoch einzelne Spektralbereiche voneinander subtrahiert, so dass sich beispielsweise die in Fig. 11 dargestellte Kurve Blau-Grün ergibt. Analog wird beispielsweise die Kurve Rot-Grün gebildet. Auf diese Weise reicht im Farb-System Blau, Grün und Rot die Bildung zweier Kurven für eine Auswertung aus. Die Steilheit der derart ermittelten Farbdichteverläufe gibt Auskunft über das Ausmass eines allfälligen Kippens der Kopiervorlage N. Die Neigung der Kurve in Fig. 11 kommt dadurch zustande, dass die Farbdichtekurve der blauempfindlichen Schicht eine grössere Steilheit aufweist als diejenige der grünempfindlichen Schicht. Diesem Ungleichgewicht wird durch eine entsprechende Reduktion der Steilheit der Farbdichtekurve der grünempfindlichen Schicht des Kopiermaterials P Rechnung getragen. Dazu wird das Kopiermaterial mit Licht derjenigen Spektralbereiche zusatzbelichtet, in denen der spektrale Dichteverlauf der Kopiervorlage N im linearen Bereich eine grössere Steigung aufweist als der lineare Bereich M der Farbdichtekurve mit der geringsten Steilheit. Die Lichtmengen für die diffusen Zusatzbelichtungen A werden vorzugsweise aus den Zusammenhängen zwischen der Steilheit des linearen Abschnittes M der jeweiligen Farbdichtekurve D des Kopiermaterials P und dem Grad an Zusatzbelichtung ermittelt (Fig. 6).

Vorstehend wurde das erfindungsgemässe Verfahren am Beispiel des Kopierens ab Negativ-Vorlage erläutert. Es versteht sich, dass das erfindungsgemässe Verfahren sinngemäss aber auch für das Kopieren von Diapositiven auf Umkehrkopiermaterial vorteilhaft eingesetzt werden kann.

Mittels der erfindungsgemässen Zusatzbelichtungen kann das Farbkopiermaterial somit auf einfache Weise an die kontrastlichen und farblichen Gegebenheiten der Kopiervorlage angepasst werden. Farbkopiermaterialien mit zu steilen linearen Bereichen der Farbdichtekurven, das heisst mit zu hoher Gradation, können gezielt beeinflusst werden, die Gradation herabgesetzt werden. Das erfindungsgemässe Verfahren erlaubt die Erstellung von farblich und bezüglich ihres Kontrastes akzeptablen und detailgetreuen Farbkopien auch von Problemaufnahmen. Durch gezielte Anhebung des spektralen Schleierwertes kann die Farbkopie auch noch künstlerisch nach Wunsch beeinflusst werden. Das Verfahren ist einfach in der Anwendbarkeit und verhältnismässig leicht in viele bestehende Belichtungssteuerungsverfahren integrierbar.

## Patentansprüche

1. Verfahren zur Erstellung von fotografischen Farbkopien von Kopiervorlagen (N) mit einem fotografischen Farbkopiergerät, bei dem die Kopiervorlage (N) spektral, insbesondere in den Grundfarben Blau (B), Grün (G) und Rot (R), ausgemessen wird, und nach Massgabe der Messdaten erforderliche Kopierlichtmengen (L) bestimmt werden, um die Kopiervorlage (N) in einer Bildbelichtung (E) auf fotografisches Kopiermaterial (P) bekannter Farbdichtekurvenverläufe (D) zu kopieren, und bei dem zusätzlich für jeden Spektralbereich (B, G, R) der Kontrastumfang der Kopiervorlage (N) bestimmt wird, um nach Massgabe des ermittelten Kontrastumfangs Lichtmengen für diffuse Zusatzbelichtungen (A) zu ermitteln, mit denen das Kopiermaterial (P) zur Beeinflussung seiner Farbdichtekurvenverläufe (D) beaufschlagt wird, dadurch gekennzeichnet, dass der ermittelte Kontrastumfang der Kopiervorlage (N) mit dem aus den zugehörigen bekannten Farbdichtekurvenverläufen (D) des Kopiermaterials (P) bestimmbaren nutzbaren Belichtungsumfang verglichen wird, und dass abhängig vom Ausmass, in dem der ermittelte Kontrastumfang den Belichtungsumfang des Kopiermaterials (P) überschreitet, ein Grad an Zusatzbelichtung derart ermittelt wird, dass das belichtete Kopiermaterial (P) für jeden Spektralbereich (B, G, R) eine Gesamtsteilheit aufweist, welche den Wert 1 nicht unterschreitet, wobei sich diese Gesamtsteilheit aus der Steilheit der Farbdichtekurven der Kopiervorlage (N) und des Kopiermaterials (P) zusammensetzt.

2. Verfahren nach Patentanspruch 1, dadurch gekennzeichnet, dass die erforderlichen Kopierlichtmengen (L) für die bildmässigen Belichtungen im jeweiligen Spektralbereich (B, G, R) um die ermittelten Lichtmengen für die Zusatzbelichtungen (A) reduziert werden.

3. Verfahren nach Patentanspruch 1 oder 2, dadurch gekennzeichnet, dass die Kopiervorlage (N) bereichsweise abgetastet wird und die Abtastbereiche (S) zu vorzugsweise konzentrischen Zonen (Z) zusammengefasst werden.

4. Verfahren nach Patentanspruch 3, dadurch gekennzeichnet, dass innerhalb jeder Zone (Z) für jeden Spektralbereich (B, G, R) ein Zonen-Kontrastwert als Differenz zwischen dem jeweiligen grössten und kleinsten zugehörigen Farbdichtewert in der betreffenden Zone bestimmt wird und durch vorzugsweise gewichtete Mittelung der Zonenkontrastwerte für jeden Spektralbereich (B, G, R) der entsprechende Kontrastumfang der Kopiervorlage (N) ermittelt wird.

5. Verfahren nach Patentanspruch 3, dadurch gekennzeichnet, dass für jede Zone (Z) mittlere Farbdichtewerte für jeden Spektralbereich (B, G, R) ermittelt werden, und dass der Kontrastumfang der Kopiervorlage (N) für den jeweiligen Spektralbereich (B, G, R) als Differenz zwischen den vorzugsweise über die zentralen 2-4 Zonen gemittelten zugehörigen Farbdichtewerten und den vorzugsweise über die peripheren 2-4 Zonen gemittelten Farbdichtewerten bestimmt wird.

6. Verfahren nach Patentanspruch 5, dadurch gekennzeichnet, dass der Zusatzbelichtungsgrad im längerwelligen Spektralbereich (R) gegenüber den anderen Spektralbereichen (B, G) um etwa 30 % - 70 %, vorzugsweise um etwa 50 %, reduziert wird.

7. Verfahren nach Patentanspruch 3, dadurch gekennzeichnet, dass alle diejenigen Abtastbereiche (S) der Kopiervorlage (N) zu zusammenhängenden Zonen (Z) zusammengefasst werden, deren Farbdichtewerte im kurzwelligen Spektralbereich (B) einen Schwellenwert überschreiten und sich beginnend von den peripheren Abtastbereichen gegen das Innere der Kopiervorlage (N) erstrecken, dass die Farbdichtewerte dieser zusammenhängenden Zonen vorzugsweise rechnerisch reduziert werden, und dass der Kontrastumfang der Kopiervorlage (N) in den einzelnen Spektralbereichen (G, R) als Differenz zwischen dem grössten und dem kleinsten zugehörigen Farbdichtewert bestimmt wird.

8. Verfahren nach Patentanspruch 7, dadurch gekennzeichnet, dass für Kopiervorlagen (N), deren zusammenhängende Zonen (Z) für den kurzwelligen Spektralbereich (B) mehr als etwa 15 % - 30 %, vorzugsweise 20 %, der gesamten Abtastbereiche (S) umfassen, der Zusatzbelichtungsgrad im längerwelligen Spektralbereich (R) gegenüber den übrigen Spektralbereichen (B, G) um etwa 30 % - 70 %, vorzugsweise etwa 50 %, erhöht wird.

9. Verfahren nach Patentanspruch 8, dadurch gekennzeichnet, dass für die übrigen Spektralbereiche (B, G) derselbe Zusatzbelichtungsgrad gewählt wird.

10. Verfahren nach einem der Patentansprüche 1-7, dadurch gekennzeichnet, dass für jeden Spektralbereich ein fester Grad an Zusatzbelichtung gewählt wird, der zuvor für eine Anzahl von kontrastreichen Kopiervorlagen (N) ermittelt wurde.

11. Verfahren nach Patentanspruch 10, dadurch gekennzeichnet, dass für jeden Spektralbereich (B, G, R) derselbe Zusatzbelichtungsgrad gewählt wird.

12. Verfahren nach einem der vorangehenden Patentansprüche, dadurch gekennzeichnet, dass Farbdichtekurvenverläufe (D) des Kopiermaterials (P), welche verschieden steile lineare Bereiche (M) aufweisen, an die Steigung des flachsten Farbdichtekurvenverlaufs angepasst werden, indem das Kopiermaterial (P) mit Licht (A) der jeweiligen zugehörigen Spektralbereiche zusatzbelichtet wird.

13. Verfahren nach Patentanspruch 14, dadurch gekennzeichnet, dass die Zusatzbelichtungen (A) mit festen Lichtmengen erfolgen, welche aus Testkopien von Graukeilen bestimmt werden, wobei der Grad an Zusatzbelichtung im jeweiligen Spektralbereich solange variiert wird, bis sich eine farblich ausgewogene Kopie des Graukeils ergibt.

14. Verfahren nach einem der Patentansprüche 1-7, dadurch gekennzeichnet, dass die Kopiervorlage (N) nach unterschiedlichen Farbstichen in den Bereichen grosser und kleiner Farbdichte untersucht wird und nach Massgabe der ermittelten Farbstiche die Lichtmengen für die diffusen Zusatzbelichtungen (A) in den respektiven Spektralbereichen bestimmt werden.

15. Verfahren nach Patentanspruch 14, dadurch gekennzeichnet, dass zur Bestimmung der unterschiedlichen Farbstiche in den Bereichen grosser und kleiner Farbdichte die einzelnen Farbdichtewerte jedes Abtastbereiches (S) mit einer Neutraldichte des jeweiligen Abtastbereiches (S) verglichen werden, welche sich als Mittelwert über alle Farbdichtewerte dieses Abtastbereiches (S) ergibt, dass für jeden Spektralbereich die Gesamtheit der Wertepaare Farbdichtewert, Neutraldichte der Kopiervorlage (N) einer nichtlinearen Regressionsanalyse, vorzugsweise einem kubischen Fit, unterzogen wird, und dass das Kopiermaterial (P) mit Licht (A) derjenigen Spektralbereiche zusatzbelichtet wird, in denen der Farbdichteverlauf der Kopiervorlage (N) im linearen Bereich eine grössere Steigung aufweist als der lineare Bereich (M) der Farbdichtekurve (D) mit der geringsten Steilheit.

16. Verfahren nach Patentanspruch 15, dadurch gekennzeichnet, dass die Lichtmengen für die diffusen Zusatzbelichtungen (A) aus Zusammenhängen zwischen der Steilheit des linearen Abschnittes (M) der jeweiligen Farbdichtekurve (D) des Kopiermaterials (P) und dem Ausmass der Zusatzbelichtung (A) ermittelt werden, welche Zusammenhänge (Fig. 6) zuvor aus Testbelichtungen ermittelt wurden.

17. Verfahren nach einem der vorangehenden Patentansprüche, dadurch gekennzeichnet, dass die Zusatzbelichtungen (A) vor, während oder nach den Bildbelichtungen (E) erfolgen.

18. Verfahren nach einem der vorangehenden Patentansprüche, dadurch gekennzeichnet, dass die mittlere spektrale Zusammensetzung der Zusatzbelichtungen (A) an die mittlere spektrale Zusammensetzung der zugehörigen Bildbelichtungen (E) angeglichen wird.

19. Verfahren nach einem der vorangehenden Patentansprüche, dadurch gekennzeichnet, dass die Zusatzbelichtungen (A) bezüglich der Ausleuchtung der Kopiervorlage (N) an die Ausleuchtung durch die jeweilige Bildbelichtung (E) angeglichen und im wesentlichen örtlich homogen gestaltet werden.

20. Verfahren nach einem der vorangehenden Patentansprüche, dadurch gekennzeichnet, dass die Bildbelichtungen (E) und die Zusatzbelichtungen (A) mit derselben Kopierlichtquelle (1) durchgeführt werden.

21. Verfahren nach Patentanspruch 20, dadurch gekennzeichnet, dass für die Zusatzbelichtungen (A) die Kopiervorlage (N) aus dem Strahlengang der Kopierlichtquelle (1) entfernt wird und durch ein örtlich homogenes, vorzugsweise streuendes Element, beispielsweise eine Streuscheibe ersetzt wird.

22. Verfahren nach Patentanspruch 20, dadurch gekennzeichnet, dass für die Zusatzbelichtungen (A) das Licht der Kopierlichtquelle (1) durch einschwenkbare Umlenkmittel (7), vorzugsweise Spiegel und/oder Umlenkprismen umgelenkt und an der Kopiervorlage (N) vorbei auf das fotografische Kopiermaterial (P) geleitet wird.

23. Verfahren nach Patentanspruch 20, dadurch gekennzeichnet, dass für die Zusatzbelichtungen (A) das Licht der Kopierlichtquelle (1) nach dem Passieren der Kopiervorlage (N) und vor dem Auftreffen auf das fotografische Kopiermaterial (P) mit einer in den Strahlengang einschwenkbaren Lichtmischeinrichtung (8), welche vorzugsweise einen Spiegelschacht und/oder Streuscheiben und/oder fiberoptische Elemente umfasst, spektral und örtlich homogenisiert wird.

## Claims

1. A process for the preparation of photographic colour copies of copying masters (N) with a photographic colour copy apparatus, in which the copying master (N) is measured spectrally, especially in the base colours blue (B), green (G) and red (R), and, according to the measured data, quantities of copying light (L) necessary for copying the copying master (N) in an imaging exposure (E) onto photographic copy material (P) having known colour density curves (D) are determined, and in which, in addition, the contrast range of the copying master (N) is determined for each spectral region (B, G, R) in order to compute, according to the contrast range determined, quantities of light for diffuse supplemental exposures (A) to which the copy material (P) is exposed in order to affect its colour density curves (D), wherein the contrast range of the copying master (N) which is determined is compared with the usable exposure range, which can be determined from the associated known colour density curves (D) of the copy material (P), and wherein, in dependence upon the extent to which the contrast range determined exceeds the exposure range of the copy material (P), a degree of supplemental exposure is determined so that the exposed copy material (P) has for each spectral region (B, G, R) a total gradient which is not less than the value 1, said total gradient being composed of the gradient of the colour density curves of the copying master (N) and of the copy material (P).

2. A process according to claim 1, wherein the necessary copying light quantities (L) for the imaging exposures in the spectral regions (B, G, R) are reduced by the quantities of light computed for the supplemental exposures (A).

3. A process according to either claim 1 or claim 2, wherein the copying master (N) is scanned by sections and the scanning sections (S) are combined into preferably concentric zones (Z).

4. A process according to claim 3, wherein within each zone (Z), for each spectral region (B, G, R), a zone contrast value is determined by obtaining the difference between the highest and lowest corresponding colour density values in the zone concerned, and, by preferably weighted averaging of the zone contrast values for each spectral region (B, G, R), the corresponding contrast range of the copying master (N) is determined.

5. A process according to claim 3, wherein for each zone (Z), average colour density values for each spectral region (B, G, R) are determined and the contrast range of the copying master (N) for the spectral region (B, G, R) concerned is determined as the difference between the corresponding colour density values averaged preferably over the central 2-4 zones and the colour density values averaged preferably over the peripheral 2-4 zones.

6. A process according to claim 5, wherein the degree of supplemental exposure in the long wave spectral region (R) is reduced relative to the other spectral regions (B, G) by about 30 to 70 %, and preferably by about 50 %.

7. A process according to claim 3, wherein all those scanning sections (S) of the copying master (N) whose colour density values in the short wave spectral region (B) exceed a threshold value and which extend from the peripheral scanning sections towards the centre of the copying master (N) are combined into contiguous zones (Z), wherein the colour density values of said contiguous zones are reduced, preferably by computation, and wherein the contrast range of the copying master (N) in the individual spectral regions (G, R) is determined as the difference between the highest and lowest corresponding colour density value.

8. A process according to claim 7, wherein for copying masters (N) whose contiguous zones (Z) comprise, for the short wave spectral region (B), more than about 15 to 30 %, and preferably 20 %, of the total number of scanning sections (S), the degree of supplemental exposure in the long wave spectral region (R) is increased relative to the remaining spectral regions (B, G) by about 30 to 70 %, and preferably about 50 %.

9. A process according to claim 8, wherein for the remaining spectral regions (B, G), the same degree of supplemental exposure is selected.

10. A process according to any one of claims 1 to 7, wherein for each spectral region a constant degree of supplemental exposure is selected, which has been determined previously for a plurality of high contrast copying masters (N).

11. A process according to claim 10, wherein the same degree of supplemental exposure is selected for each spectral region (B, G, R).

12. A process according to any one of the preceding claims, wherein colour density curves (D) of the copy material (P), which have different linear segment gradients (M), are adapted to the gradient of the flattest colour density curve by additionally exposing the copy material (P) to light (A) of the corresponding spectral regions.

13. A process according to claim 14, wherein the supplemental exposures (A) are carried out with constant quantities of light determined from test copies of step wedges, the degree of supplemental exposure in the spectral region concerned being varied until a colour-balanced copy of the step wedge is obtained.

14. A process according to any one of claims 1 to 7, wherein the copying master (N) is examined to detect different colour casts in the areas of high and low colour density and the quantities of light for the diffuse supplemental exposures (A) in the respective spectral regions are determined in accordance with the colour casts detected.

15. A process according to claim 14, wherein, in order to determine the different colour casts in the areas of high and low colour density, the individual colour density values of each scanning section (S) are compared with a neutral density of the scanning section (S) concerned, said neutral density being obtained as an average of all colour density values of that scanning section (S), wherein, for each spectral region, all the value pairs of colour density and neutral density of the copying master (N) are subjected to non-linear regressive analysis, preferably a cubic fit, and wherein the copy material (P) is additionally exposed to light (A) of those spectral regions in which the colour density curve of the copying master (N) has a steeper slope in the linear segment than the linear segment (M) of the colour density curve (D) having the smallest gradient.

16. A process according to claim 15, wherein the quantities of light for the diffuse supplemental exposures (A) are determined from relationships of the gradient of the linear segment (M) of the respective colour density curve (D) of the copy material (P) and the extent of the supplemental exposure (A), which relationships (Fig. 6) were determined previously by test exposures.

17. A process according to any one of the preceding claims, wherein the supplemental exposures (A) take place before, during or after the imaging exposures (E).

18. A process according to any one of the preceding claims, wherein the average spectral composition of the supplemental exposures (A) is adapted to the average spectral composition of the corresponding imaging exposures (E).

19. A process according to any one of the preceding claims, wherein the supplemental exposures (A) relative to the illumination of the copying master (N) are adapted to the illumination by the respective imaging exposure (E) and are made substantially spatially homogeneous.

20. A process according to any one of the preceding claims, wherein the imaging exposures (E) and the supplemental exposures (A) are carried out with the same source of copying light (1).

21. A process according to claim 20, wherein for the supplemental exposures (A) the copying master (N) is removed from the beam path of the copying light source (1) and replaced by a spatially homogeneous, preferably diffusing element, for example a diffusing screen.

22. A process according to claim 20, wherein for the supplemental exposures (A) the light of the copying light source (1) is diverted by pivoting deviating means (7), preferably mirrors and/or deviating prisms, and guided past the copying master (N) onto the photographic copy material (P).

23. A process according to claim 20, wherein for the supplemental exposures (A) the light of the copying light source (1) is homogenised spectrally and spatially, after passing the copying master (N) and prior to impacting the photographic copy material (P), by a light-mixing device (8) pivotable into the beam path, which light-mixing device preferably comprises a mirror shaft and/or diffusing screens and/or optical fibre elements.

## Revendications

1. Procédé pour produire des copies photographiques en couleur d'originaux transparents (N) au moyen d'une tireuse couleur photographique, selon lequel l'original (N) est mesuré/analysé spectralement, en particulier dans les couleurs primaires bleu (B), vert (G) et rouge (R), et des quantités de lumière de tirage (L) nécéssaires sont établies en fonction des données obtenues par la mesure afin de copier l'original (N) dans une exposition d'image (E) sur du matériau de tirage photographique (P) ayant des courbes de densité chromatique connues, et selon lequel, en plus, l'étendue du contraste de l'original (N) est déterminée pour chaque domaine spectral (B, G, R) afin d'établir, en fonction de l'étendue de contraste trouvée, des quantités de lumière pour des expositions supplémentaires diffuses (A), auxquelles le matériau de tirage (P) est soumis pour influencer l'allure de ses courbes de densité chromatique (D), caractérisé en ce que l'étendue de contraste trouvée de l'original (N) est comparée avec l'étendue d'exposition utile, pouvant être déterminée à partir des courbes de densité chromatique (D) connues correspondantes du matériau de tirage (P), et que, suivant la mesure dans laquelle l'étendue de contraste trouvée dépasse l'étendue d'exposition du matériau de tirage (P), un degré d'exposition supplémentaire est établi, de telle sorte que le matériau de tirage (P) exposé présente, pour chaque domaine spectral (B, G, R), une pente totale qui ne soit pas inférieure à 1, cette pente totale étant composée de la pente des courbes de densité chromatique de l'original (N) et du matériau de tirage (P).

2. Procédé selon la revendication 1, caractérisé en ce que les quantités de lumière de tirage (L) pour les expositions d'image dans le domaine spectral (B, G, R) respectifs sont diminuées des quantités de lumière établies pour les expositions supplémentaires (A).

3. Procédé selon la revendication 1 ou 2, caractérisé en ce que l'original (N) est exploré région par région et les régions d'exploration (S) sont rassemblées en zones (Z), de préférence concentriques.

4. Procédé selon la revendication 3, caractérisé en ce que, à l'intérieur de chaque zone (Z), est établie, pour chaque domaine spectral (B, G, R), une valeur de contraste de zone comme différence entre les valeurs de densité chromatique maximale et minimale correspondantes dans la zone concernée et l'étendue de contraste correspondante de l'original (N) est déterminée par prise de la moyenne, de préférence pondérée, des valeurs de contraste de zone pour chaque domaine spectral (B, G, R).

5. Procédé selon la revendication 3, caractérisé en ce que, pour chaque zone (Z), sont déterminées des valeurs de densité chromatique moyennes pour chaque domaine spectral (B, G, R), et que l'étendue de contraste de l'original (N) pour le domaine spectral (B, G, R) concerné est déterminée comme la différence entre les valeurs de densité chromatique, représentant de préférence des moyennes, des 2 - 4 zones centrales, et les valeurs de densité chromatique, représentant de préférence des moyennes, des 2 - 4 zones périphériques.

6. Procédé selon la revendication 5, caractérisé en ce que le degré d'exposition supplémentaire dans le domaine spectral (R) de plus grande longueur d'onde est réduit d'environ 30 - 60 %, de préférence d'environ 50 %, par rapport aux autres domaines spectraux (B, G).

7. Procédé selon la revendication 3, caractérisé en ce que toutes les régions d'exploration (S) de l'original (N), dont les valeurs de densité chromatique dépassent un seuil dans le domaine spectral (B) de faible longueur d'onde et s'étendent vers l'intérieur de l'original (N), à commencer par les régions d'exploration périphériques, sont rassemblées en zones (Z) cohérentes, que les valeurs de densité chromatique de ces zones cohérentes sont réduites, de préférence par calcul, et que l'étendue de contraste de l'original (N) dans les différents domaines spectraux (G, R) est déterminée comme la différence entre les valeurs de densité chromatique maximale et minimale correspondantes.

8. Procédé selon la revendication 7, caractérisé en ce que, pour des originaux (N) dont les zones cohérentes (Z) pour le domaine spectral (B) de faible longueur d'onde couvrent plus d'environ 15 - 30 %, de préférence plus de 20 % de l'ensemble des régions d'exploration (S), le degré d'exposition supplémentaire dans le domaine spectral (R) de plus grande longueur d'onde est augmenté d'environ 30 - 70 %, de préférence d'environ 50 %, par rapport aux autres domaines spectraux (B, G).

9. Procédé selon la revendication 8, caractérisé en ce que le même degré d'exposition supplémentaire est choisi pour les autres domaines spectraux (B, G).

10. Procédé selon une des revendications 1 à 7, caractérisé en ce qu'un degré fixe d'exposition supplémentaire est choisi pour chaque domaine spectral, degré qui a été déterminé précédemment pour un certain nombre d'originaux (N) à grand contraste.

11. Procédé selon la revendication 10, caractérisé en ce que le même degré d'exposition supplémentaire est choisi pour chaque domaine spectral (B, G, R).

12. Procédé selon une des revendications précédentes, caractérisé en ce que les courbes de densité chromatique (D) du matériau de tirage (P), comportant des segments linéaires (M) avec des pentes différentes, sont adaptées à la pente de la courbe de densité chromatique la plus plate, du fait que le matériau de tirage (P) est soumis à une exposition supplémentaire avec de la lumière (A) des domaines spectraux correspondants.

13. Procédé selon la revendication 14, caractérisé en ce que les expositions supplémentaires (A) s'effectuent avec des quantités de lumière fixes qui sont déterminées à partir de copies de test de coins à échelons, le degré d'exposition supplémentaire dans chaque domaine spectral étant varié jusqu'à ce que soit obtenue une copie du coin à échelons équilibrée en couleur.

14. Procédé selon une des revendications 1 à 7, caractérisé en ce que l'original (N) est examiné sur la présence de différentes nuances de couleur dans les zones de grande et de petite densité chromatique et que les quantités de lumière pour les expositions supplémentaires diffuses (A) dans les domaines spectraux respectifs sont établies en fonction des nuances de couleur relevées.

15. Procédé selon la revendication 14, caractérisé en ce que, pour déterminer les différentes nuances de couleur dans les zones de grande et de petite densité chromatique, les différentes valeurs de densité chromatique de chaque région d'exploration (S) sont comparées avec une densité neutre de la région (S) concernée, densité neutre qui s'obtient en tant que valeur moyenne de toutes les valeurs de densité chromatique de cette région d'exploration (S), que, pour chaque domaine spectral, la totalité des paires de valeurs constituées par la valeur de densité chromatique et la densité neutre de l'original (N) est soumise à une analyse de régression non-linéaire, de préférence selon une formule cubique, et que le matériau de tirage (P) est soumis à une exposition supplémentaire avec de la lumière (A) des domaines spectraux dans lesquels la courbe de densité chromatique de l'original (N) présente dans son segment linéaire une plus forte pente que le segment linéaire (M) de la courbe de densité chromatique (D) ayant la plus faible pente.

16. Procédé selon la revendication 15, caractérisé en ce que les quantités de lumière pour les expositions supplémentaires diffuses (A) sont établies à partir de relations entre la pente du segment linéaire (N) de la courbe de densité chromatique (D) concernée du matériau de tirage (P) et l'ampleur de l'exposition supplémentaire (A), relations qui ont été déterminées précédemment (figure 6) à partir d'expositions de test.

17. Procédé selon une des revendications précédentes, caractérisé en ce que les expositions supplémentaires (A) s'effectuent avant, pendant ou après les expositions d'image (E).

18. Procédé selon une des revendications précédentes, caractérisé en ce que la composition spectrale moyenne des expositions supplémentaires (A) est adaptée ou rendue égale à la composition spectrale moyenne des expositions d'image (E) correspondantes.

19. Procédé selon une des revendications précédentes, caractérisé en ce que les expositions supplémentaires (A) sont adaptées ou rendues égales, pour ce qui concerne l'éclairement de l'original (N), à l'éclairement produit par l'exposition d'image (E) concernée et sont essentiellement rendues localement homogènes.

20. Procédé selon une des revendications précédentes, caractérisé en ce que les expositions d'image (E) et les expositions supplémentaires (A) sont effectuées avec la même source lumineuse de tirage (1).

21. Procédé selon la revendication 20, caractérisé en ce que, pour les expositions supplémentaires (A), l'original (N) est retiré du faisceau de rayonnement de la source lumineuse de tirage (1) et remplacé par un élément localement homogène, de préférence diffusant, par exemple par un écran diffusant.

22. Procédé selon la revendication 20, caractérisé en ce que, pour les expositions supplémentaires (A), la lumière de la source lumineuse de tirage (1) est déviée par des moyens de déviation (7) pouvant être mis en place par pivotement, de préférence par des miroirs et/ou des prismes de déviation, et est dirigée sur le matériau de tirage photographique (P) avec contournement de l'original (N).

23. Procédé selon la revendication 20, caractérisé en ce que, pour les expositions supplémentaires (A), après le passage par l'original (N) et avant de tomber sur le matériau de tirage photographique (P), la lumière de la source lumineuse de tirage (1) est homogénéisée spectralement et localement par un dispositif de mélange de lumière (8) susceptible d'être engagé dans le faisceau de rayonnement, dispositif qui comprend de préférence un puits à miroirs et/ou des écrans diffusants et/ou des éléments formés par ou comportant des fibres optiques.
